(19) Europäisches Patentamt
European Patent Office
Office européen des brevets

(11) Veröffentlichungsnummer: **0 624 628 A1**

# (12) EUROPÄISCHE PATENTANMELDUNG

(21) Anmeldenummer: **94106398.4**

(22) Anmeldetag: **25.04.94**

(51) Int. Cl.5: **C09B 44/14**, //D06P3/24, D06P3/52,D06P3/70,D06P1/41

(30) Priorität: **08.05.93 DE 4315383**

(43) Veröffentlichungstag der Anmeldung:
**17.11.94 Patentblatt 94/46**

(84) Benannte Vertragsstaaten:
**CH DE FR GB LI**

(71) Anmelder: **BAYER AG**
**D-51368 Leverkusen (DE)**

(72) Erfinder: **Meisel, Karlheinrich, Dr.**
**Engstenberger Höhe 11**
**D-51519 Odenthal (DE)**

(54) **Kationische Diazacyaninfarbstoffe.**

(57) Neue kationische Diazacyaninfarbstoffe der Formel (I)

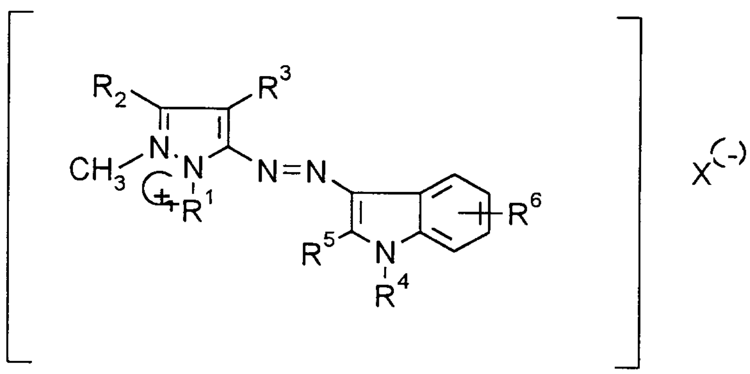

(I)

in der

- $R^1$ für gegebenenfalls substituiertes Alkyl oder gegebenenfalls substituiertes Aryl,
- $R^2$ für Wasserstoff, gegebenenfalls substituiertes Alkyl oder gegebenenfalls substituiertes Aryl,
- $R^3$ für gegebenenfalls substituiertes Alkoxycarbonyl, gegebenenfalls substituiertes Aminocarbonyl oder Cyano,
- $R^4$ für Wasserstoff oder gegebenenfalls substituiertes Alkyl,
- $R^5$ für gegebenenfalls substituiertes Alkyl oder gegebenenfalls substituiertes Aryl,
- $R^6$ für Wasserstoff, gegebenenfalls substituiertes Alkyl, Halogen, gegebenenfalls durch Alkyl oder Aryl, die ihrerseits gegebenenfalls substituiert sein können, substituiertes Amino, Cyano, Nitro, gegebenenfalls substituiertes Alkoxycarbonyl, gegebenenfalls substituiertes Alkylcarbonyl, gegebenenfalls substituiertes Aralkylcarbonyl, gegebenenfalls substituiertes Alkylsulfonyl, gegebenenfalls substituiertes Aralkylsulfonyl, gegebenenfalls substituiertes Arylsulfonyl oder gegebenenfalls durch Alkyl oder Aryl, die ihrerseits gegebenenfalls substituiert sein können, substituiertes Aminosulfonyl und
- $X^{\ominus}$ für ein Äquivalent eines in der Farbstoffchemie üblichen Anions stehen,

ein Verfahren zu deren Herstellung und deren Verwendung zum Färben und Bedrucken von Textilfasermaterialien.

EP 0 624 628 A1

Die vorliegende Erfindung betrifft neue kationische Diazacyaninfarbstoffe, ein Verfahren zu deren Herstellung, ihre Verwendung zum Färben und Bedrucken von Textilfasermaterialien und Textilfasermaterialien, welche mit den neuen kationischen Diazacyaninfarbstoffen gefärbt oder bedruckt sind.

Es wurden kationische Diazacyaninfarbstoffe der Formel (I) gefunden

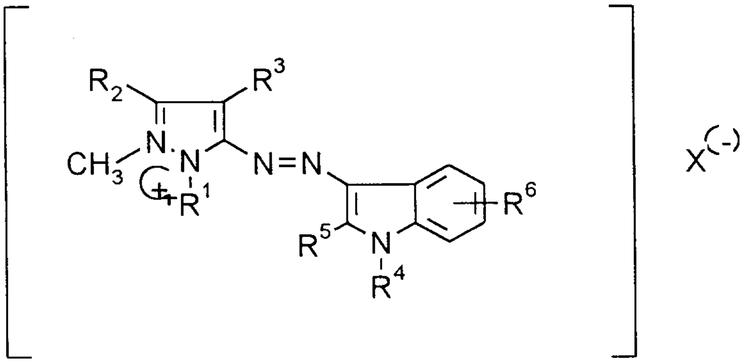

(I)

in der

- $R^1$ für gegebenenfalls substituiertes Alkyl oder gegebenenfalls substituiertes Aryl,
- $R^2$ für Wasserstoff, gegebenenfalls substituiertes Alkyl oder gegebenenfalls substituiertes Aryl,
- $R^3$ für gegebenenfalls substituiertes Alkoxycarbonyl, gegebenenfalls substituiertes Aminocarbonyl oder Cyano,
- $R^4$ für Wasserstoff oder gegebenenfalls substituiertes Alkyl,
- $R^5$ für gegebenenfalls substituiertes Alkyl oder gegebenenfalls substituiertes Aryl,
- $R^6$ für Wasserstoff, gegebenenfalls substituiertes Alkyl, Halogen, gegebenenfalls durch Alkyl oder Aryl, die ihrerseits gegebenenfalls substituiert sein können, substituiertes Amino, Cyano, Nitro, gegebenenfalls substituiertes Alkoxycarbonyl, gegebenenfalls substituiertes Alkylcarbonyl, gegebenenfalls substituiertes Aralkylcarbonyl, gegebenenfalls substituiertes Alkylsulfonyl, gegebenenfalls substituiertes Aralkylsulfonyl, gegebenenfalls substituiertes Arylsulfonyl oder gegebenenfalls durch Alkyl oder Aryl, die ihrerseits gegebenenfalls substituiert sein können, substituiertes Aminosulfonyl und
- $X^{\ominus}$ für ein Äquivalent eines in der Farbstoffchemie üblichen Anions stehen.

Bei den Alkylgruppen, bei substituierten Alkylgruppen und solchen in kombinierten Molekülteilen, die Alkylgruppen enthalten, wie in Alkoxycarbonyl, durch Alkyl substituiertes Amino, Alkylcarbonyl, Aralkylcarbonyl, Alkylsulfonyl, Aralkylsulfonyl und durch Alkyl substituiertes Aminosulfonyl, kann es sich beispielsweise um $C_1$-$C_6$-Alkylgruppen handeln.

Bei den Arylgruppen, bei substituierten Arylgruppen und solchen in kombinierten Molekülteilen, die Arylgruppen enthalten, wie durch Aryl substituiertes Amino, Aralkylcarbonyl, Aralkylsulfonyl, Arylsulfonyl und durch Aryl substituiertes Aminosulfonyl, kann es sich beispielsweise um $C_6$-$C_{10}$-Arylgruppen handeln.

Bei Halogengruppen, auch solchen in kombinierten Molekülteilen, die Halogengruppen enthalten, wie durch Halogen substituiertes Alkyl oder Phenoxyl, kann es sich beispielsweise um Fluor, Chlor oder Brom handeln. Besonders bevorzugt ist Chlor.

In der Farbstoffchemie übliche Anionen sind beispielsweise Chlorid, Bromid, Sulfat, Methylsulfat, Acetat, Lactat, Tetrafluoroborat, Trichlorzinkat, Tetrachlorzinkat und Tetrachlorferrat.

Bei bevorzugten Farbstoffen der Formel (I) steht

- $R^1$ für $C_1$-$C_4$-Alkyl, das gegebenenfalls durch $C_1$-$C_4$-Alkoxy, Phenyl, Hydroxy, Carbonyl, $C_1$-$C_4$-Alkoxycarbonyl, Halogen, Cyano, gegebenenfalls substituiertes Amino, Aminocarbonyl, Sulfonyl, $C_1$-$C_4$-Alkoxysulfonyl, $C_6$-$C_{10}$-Arylsulfonyloxy-$C_1$-$C_4$-Alkyl der Formel Aryl-$SO_2$-O-alkyl-, Phenoxysulfonyl oder Aminosulfonyl substituiert ist,
  wobei bei Phenylsubstituenten das Phenyl gegebenenfalls ein- bis viermal durch $C_1$-$C_4$-Alkyl, Halogen, Nitro, $C_1$-$C_4$- Alkoxy, $C_6$-$C_{10}$-Aryl-$C_1$-$C_4$-Alkoxy der Formel Aryl-alkoxy-, Cyano, Nitro, Hydroxy, Amino, das gegebenenfalls seinerseits ein- oder zweimal durch $C_1$-$C_4$-Alkyl, Phenyl, Acetyl oder Benzoyl substituiert sein kann, Aminocarbonyl, das gegebenenfalls seinerseits ein- oder zweimal durch $C_1$-$C_4$-Alkyl oder Phenyl substituiert sein kann, Sulfonyl, $C_1$-$C_4$-Alkylsulfonyl oder Aminosulfonyl substituiert sein kann, wobei bei Aminosulfonylsubstituenten die Amingruppe

gegebenenfalls ihrerseits ein- bis zweimal durch $C_1$-$C_4$-Alkyl oder Phenyl substituiert sein kann, und

wobei bei Amino-, Aminocarbonyl- oder Aminosulfonylsubstituenten die Aminogruppe gegebenenfalls jeweils ein- oder zweimal durch $C_1$-$C_4$-Alkyl, Phenyl oder Acetyl substituiert sein kann, oder

für Phenyl, das gegebenenfalls durch $C_1$-$C_4$-Alkyl, $C_1$-$C_4$-Alkoxy, $C_6$-$C_{10}$-Aryl-$C_1$-$C_4$-Alkoxy der Formel Alkoxy-aryl-, Amino, Aminocarbonyl, $C_1$-$C_4$-Alkoxysulfonyl, $C_1$-$C_4$-Alkoxycarbonyl, $C_6$-$C_{10}$-Arylsulfonyl-oxy-$C_1$-$C_4$-alkyl der Formel Aryl-$SO_2$-O-Alkyl-, Sulfonyl, Phenoxysulfonyl, Cyano, Nitro, Hydroxy oder Carboxyl substituiert ist,

wobei Aminosubstituenten gegebenenfalls ein- oder zweimal durch $C_1$-$C_6$-Alkyl, Phenyl oder Acetyl substituiert sein können und

wobei bei Aminocarbonyl- und Aminosulfonylsubstituenten die Aminogruppe gegebenenfalls jeweils ein- oder zweimal durch $C_1$-$C_4$-Alkyl oder Phenyl substituiert sein kann,

$R^2$ für Wasserstoff für $C_1$-$C_4$-Alkyl, das gegebenenfalls in gleicher Weise substituiert sein kann wie bei der Definition von Alkyl bei $R^1$ angegeben oder für Phenyl, das gegebenenfalls in gleicher Weise substituiert sein kann wie bei der Definition von Phenyl bei $R^1$ angegeben,

$R^3$ für $C_1$-$C_4$-Alkoxycarbonyl, das gegebenenfalls in gleicher Weise substituiert sein kann, wie bei der Definition von $C_1$-$C_4$-Alkyl bei $R^1$ angegeben, für Aminocarbonyl, das gegebenenfalls in gleicher Weise substituiert sein kann, wie bei der Definition von $C_1$-$C_4$-Alkyl substituierten Aminocarbonyl bei $R^1$ angegeben oder für Cyano,

$R^4$ für Wasserstoff oder für $C_1$-$C_4$-Alkyl, das gegebenenfalls in gleicher Weise substituiert sein kann, wie bei der Definition von $C_1$-$C_4$-Alkyl bei $R^1$ angegeben,

$R^5$ für $C_1$-$C_4$-Alkyl, das gegebenenfalls in gleicher Weise substituiert sein kann, wie bei der Definition von $C_1$-$C_4$-Alkyl bei $R^1$ angegeben oder für Phenyl, das gegebenenfalls in gleicher Weise substituiert sein kann, wie bei der Definition von Phenyl bei $R^1$ angegeben,

$R^6$ für Wasserstoff, für $C_1$-$C_4$-Alkyl, das gegebenenfalls in gleicher Weise substituiert sein kann, wie bei der Definition von $C_1$-$C_4$-Alkyl bei $R^1$ angegeben, für Chlor, für Amino, Aminocarbonyl oder Aminosulfonyl, die gegebenenfalls in gleicher Weise substituiert sein können wie bei der Definition von $C_1$-$C_4$-Alkyl, das mit diesen Resten substituiert ist, bei $R^1$ angegeben, für Cyano, für Nitro, für $C_1$-$C_4$-Alkoxycarbonyl, für $C_1$-$C_4$-Alkylcarbonyl, für $C_6$-$C_{10}$-Aryl-$C_1$-$C_4$-Alkylcarbonyl, für $C_1$-$C_4$-Alkylsulfonyl, für $C_6$-$C_{10}$-Aryl-$C_1$-$C_4$-Alkylsulfonyl, für $C_6$-$C_{10}$-Arylsulfonyl oder für Aminosulfonyl, das gegebenenfalls ein- oder zweimal mit $C_1$-$C_4$-Alkyl oder Phenyl substituiert sein kann und

$X^{\ominus}$ für ein Äquivalent von Chlorid, Bromid, Sulfat, Methylsulfat, Acetat, Lactat, Tetrafluoroborat, Trichlorzinkat, Tetrachlorzinkat oder Tetrachlorferrat.

Bei besonders bevorzugten Farbstoffen der Formel (I) steht

$R^1$ für $C_1$-$C_4$-Alkyl, das gegebenenfalls ein- bis zweimal durch Phenyl, Hydroxy, Chlor, Cyano oder Aminocarbonyl substituiert sein kann oder für Phenyl, das gegebenenfalls ein- bis dreimal durch $C_1$-$C_4$-Alkyl, $C_1$-$C_4$-Alkoxy, Cyano, Nitro, Hydroxy oder Amino, das gegebenenfalls seinerseits ein- oder zweimal durch $C_1$-$C_4$-Alkyl, Phenyl oder Acetyl substituiert sein kann,

$R^2$ für Wasserstoff, für $C_1$-$C_4$-Alkyl, das gegebenenfalls ein- oder zweimal durch Cyano oder Aminocarbonyl substituiert sein kann oder für Phenyl, das gegebenenfalls ein- bis dreimal durch $C_1$-$C_4$-Alkyl, $C_1$-$C_4$-Alkoxy, $C_1$-$C_4$-Alkoxycarbonyl oder Cyano substituiert sein kann

$R^3$ für $C_1$-$C_4$-Alkoxycarbonyl, das gegebenenfalls ein- bis zweimal durch Phenyl substituiert sein kann, für Aminocarbonyl, das gegebenenfalls ein- oder zweimal durch $C_1$-$C_4$-Alkyl oder Phenyl substituiert sein kann oder für Cyano,

$R^4$ für Wasserstoff oder für $C_1$-$C_4$-Alkyl, das gegebenenfalls ein- bis zweimal durch Chlor, Cyano, $C_1$-$C_4$-Alkoxycarbonyl, Phenyl oder Aminocarbonyl substituiert sein kann, wobei Aminocarbonyl gegebenenfalls ein- oder zweimal durch $C_1$-$C_4$-Alkyl oder Phenyl substituiert sein kann,

$R^5$ für $C_1$-$C_4$-Alkyl, das gegebenenfalls ein- oder zweimal duch Chlor oder Cyano substituiert sein kann oder für Phenyl, das gegebenenfalls ein- bis dreimal durch $C_1$-$C_4$-Alkyl, Chlor, Cyano, Nitro, $C_1$-$C_4$-Alkoxy, $C_1$-$C_4$-Alkoxycarbonyl, Sulfonyl, $C_1$-$C_4$-Alkoxysulfonyl, Amino oder Aminocarbonyl substituiert sein kann, wobei Amino und Aminocarbonyl gegebenenfalls ein- oder zweimal durch $C_1$-$C_4$-Alkyl oder Phenyl substituiert sein kann,

$R^6$ für Wasserstoff, für Chlor, für $C_1$-$C_4$-Alkyl, das gegebenenfalls ein- oder zweimal durch $C_1$-$C_4$-Alkoxy, Amino oder Aminocarbonyl substituiert sein können, wobei Amino und Aminocarbonyl gegebenenfalls ein- oder zweimal durch $C_1$-$C_4$-Alkyl oder Phenyl substituiert sein können, für Amino, das gegebenenfalls ein- oder zweimal durch $C_1$-$C_4$-Alkyl, das gegebenenfalls ein- oder

zweimal durch Cyano, Chlor oder Phenyl substituiert sein kann, für Aminocarbonyl, das gegebenenfalls ein- oder zweimal durch $C_1$-$C_4$-Alkyl oder Phenyl substituiert sein kann, für Cyano, für Nitro, für $C_1$-$C_4$-Alkoxycarbonyl, für $C_1$-$C_4$-Alkylcarbonyl, $C_1$-$C_4$-Alkylsulfonyl, für für Phenylsulfonyl oder für Aminosulfonyl, das gegebenenfalls ein- oder zweimal durch $C_1$-$C_4$-Alkyl oder Phenyl substituiert sein kann und

$X^{\ominus}$ die oben angegebene Bedeutung hat.

Bei ganz besonders bevorzugten Farbstoffen der Formel (I) steht

$R^1$ für Methyl, Ethyl oder Phenyl,

$R^2$ für Wassertoff, Methyl, Ethyl, Cyanomethyl, Aminocarbonylmethyl oder Phenyl,

$R^3$ für Methoxycarbonyl, Ethoxycarbonyl, Benzoxycarbonyl, Cyano oder Aminocarbonyl,

$R^4$ für Wasserstoff oder $C_1$-$C_4$-Alkyl, das gegebenenfalls durch eine Phenyl-, Cyano- oder Aminocarbonylgruppe substituiert sein kann, wobei Aminocarbonyl gegebenenfalls ein- oder zweimal durch $C_1$-$C_4$-Alkyl oder Phenyl substituiert sein kann,

$R^5$ für $C_1$-$C_4$-Alkyl, das gegebenenfalls durch eine Cyanogruppe substituiert sein kann, oder für Phenyl, das gegebenenfalls ein- oder zweimal durch Methyl, Ethyl, Amino, Cyano, Aminocarbonyl, Methoxy, Ethoxy, Methoxycarbonyl oder Ethoxycarbonyl substituiert sein kann, wobei Amino gegebenenfalls ein- oder zweimal durch Methyl oder Ethyl und Aminocarbonyl gegebenenfalls ein- oder zweimal durch Methyl, Ethyl oder Phenyl substituiert sein kann und

$R^6$ für Wasserstoff, für Methyl oder Ethyl, die gegebenenalls durch eine Cyano-, Methoxy-, Ethoxy, Amino- oder Aminocarbonylgruppe substituiert sein können, wobei Amino gegebenenfalls ein- oder zweimal durch Methyl oder Ethyl und Aminocarbonyl gegebenenfalls ein- oder zweimal durch Methyl, Ethyl oder Phenyl substituiert sein kann, für Amino, das gegebenenfalls ein- oder zweimal durch Methyl, Ethyl, Cyanmethyl, Cyanethyl, Methylphenyl oder Ethylphenyl substituiert sein kann, für Aminocarbonyl, das gegebenenfalls ein- oder zweimal durch Methyl, Ethyl oder Phenyl substituiert sein kann, für Cyano, für Nitro, für Methoxycarbonyl, für Ethoxycarbonyl, für Methylsulfonyl, für Ethylsulfonyl, Phenylsulfonyl oder Aminosulfonyl in 5-Stellung und

$X^{\ominus}$ für ein Äquivalent von Chlorid, Acetat, Trichlorzinkat oder Tetrachlorferrat.

Die vorliegende Erfindung betrifft weiterhin ein Verfahren zur Herstellung von kationischen Diazacyaninfarbstoffen der Formel (I), das dadurch gekennzeichnet ist, daß man eine Verbindung der Formel (II)

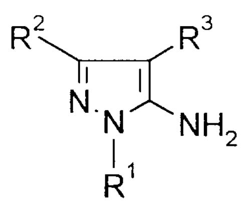

(II),

in der $R^1$, $R^2$ und $R^3$ die bei Formel (I) angegebene Bedeutung haben, mit Nitrosylschwefelsäure in Gegenwart von Essigsäure und/oder Propionsäure diazotiert, das Diazotierungsprodukt mit einer Verbindung der Formel (III) umsetzt

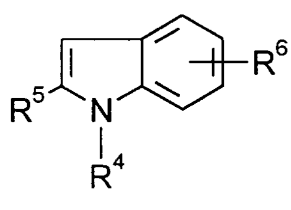

(III),

in der $R^4$, $R^5$ und $R^6$ die bei Formel (I) angegebene Bedeutung haben,
kuppelt und die entstandenen Azofarbstoffe mit einem Methylierungsmittel in einem Lösungsmittel methyliert.

Die Diazotierung kann beispielsweise bei Temperaturen unter +10 °C, vorzugsweise unter +5 °C, die Kupplung beispielsweise bei Temperaturen unter +30 °C, vorzugsweise unter +25 °C und die Methylierung beispielsweise bei 40 bis 90 °C, vorzugsweise 70 bis 90 °C durchgeführt werden.

Die Reaktanden werden bevorzugt im stöchiometrischen Verhältnis eingesetzt, man kann jedoch auch einen der Reaktanden im Überschuß einsetzen, beispielsweise die Kupplungskomponente in einer Menge von 1,01 bis 1,20 Mol, bezogen auf das Diazotierungsprodukt der Verbindung der Formel (II).

Methylierungsmittel können beispielsweise Dimethylsulfat, Methylchlorid, Methyliodid, Dimethylcarbonat und Phosphorsäuretrimethylester sein. Als Lösungsmittel für die Methylierung kommen z.B. N-Methylpyrrolidon und Dimethylformamid infrage.

Aus dem nach der Diazotierung, Kupplung und Methylierung vorliegenden Reaktionsgemisch kann man die Farbstoffe der Formel (I), z.B. isolieren, indem man das Reaktionsgemisch auf einen Überschuß Wasser austrägt, Kochsalz zufügt und den Farbstoff der Formel (I) durch Filtration abtrennt und gegebenenfalls wäscht. In manchen Fallen fällt der Farbstoff der Formel (I), gegebenenfalls nach Abkühlung, direkt aus. Man kann dann auf die Zugabe von Kochsalz verzichten.

Die vorliegende Erfindung betrifft weiterhin die Verwendung von kationischen Diazacyaninfarbstoffen der Formel (I) zum Färben und Bedrucken von Textilfasermaterialien. Hierfür sind besonders Textilfasermaterialien geeignet, die aus Polyacrylnitril, sauer modifizierten Polyamiden und/oder sauer modifizierten Polyestern bestehen oder eines oder mehrere dieser Materialien enthalten. Das Färben und das Bedrucken solcher Materialien mit den Farbstoffen der Formel (I) kann nach an sich bekannten Methoden erfolgen.

Schließlich betrifft die vorliegende Erfindung auch Textilfasermaterialien, die mit kationischen Diazacyaninfarbstoffen der Formel (I) gefärbt oder bedruckt sind.

Die erfindungsgemäßen kationischen Diazacyaninfarbstoffe ergeben brillante und farbstarke gelbe bis orangefarbene Färbungen mit hohen Lichtechtheiten und guten Wasch-, Schweiß- und Dekaturechtheiten. Die Farbstoffe sind in einem großen pH-Bereich, z.B. von 2 bis 7, stabil und können gegebenenfalls mit anderen kationischen Farbstoffen kombiniert angewendet werden.

Gegenüber bekannten Diazacyaninfarbstoffen, beispielsweise solchen die der Formel (I) entsprechen, jedoch als Substituent $R^3$ Wasserstoff oder Methyl enthalten (siehe z.B. US-A 3 585 128, US-A 3 515 715, EP-A 55 224), zeichnen sich die erfindungsgemäßen Farbstoffe insbesondere dadurch aus, daß sie, falls sie in unbeabsichtigter Weise in die Umwelt geraten, dort eine stark verminderte Daphnien-, Fisch- und Algentoxizität aufweisen. Die erfindungsgemäßen Farbstoffe können deshalb mit weniger Aufwand transportiert werden.

## Beispiele

### Beispiel 1

a) Diazotierung

In 50 ml 96 Gew.-%iger Schwefelsäure wurden langsam 7,2 g Natriumnitrit eingetragen und 100 ml einer Mischung aus 1 Gew.-Teil Propionsäure und 5 Gew.-Teilen Essigsäure zugegeben. Bei einer Temperatur von weniger als +3°C wurden langsam 10,9 g 1-Methyl-4-cyano-5-aminopyrazol und 100 ml des oben angegebenen Propionsäure-Essigsäure-Gemisches zugefügt. Es wurde noch 2 Stunden bei einer Temperatur von unter +3°C nachgerührt.

b) Kupplung

14,5 g 1,2-Dimethylindol wurden in 100 ml des auch bei a) eingesetzten Propionsäure-Essigsäure-Gemisches gelöst und diese Lösung bei Temperaturen unter +5°C langsam mit der gemäß a) hergestellten Diazoniumsalzlösung versetzt. Die vereinigten Lösungen wurden anschließend mit Natriumacetat auf einen pH-Wert von 5 eingestellt, mit 1,5 l Wasser verdünnt, 10 Minuten verrührt und dann abgesaugt. So wurden 21,9 g des Azofarbstoffs der Formel

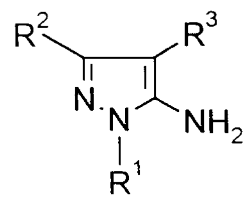

(II),

erhalten.

c) Methylierung

11,1 g des gemäß b) erhaltenen Azofarbstoffs wurden in 100 ml N-Methylpyrrolidon mit 25 ml Dimethylsulfat 13 Stunden bei 80°C methyliert. Danach wurde abgekühlt, abgesaugt und mit N-Methylpyrrolidon gewaschen. Der feuchte Filterkuchen wurde in 400 ml 5 Gew.-%iger wäßriger Kochsalzlösung 2 Stunden bei Raumtemperatur verrührt. Dann wurde abgetrennt und der Niederschlag mit 5 Gew.-%iger Kochsalzlösung gewaschen. Es wurden 12,3 g des Farbstoffs der Formel (I) mit $R^1 = CH_3$, $R^2 = H$, $R^3 = CN$, $R^4 = CH_3$, $R^5 = CH_3$ und $R^6 = H$ erhalten. Der $\lambda_{max}$-Wert dieses Farbstoffs betrug 458 nm.

## Beispiele 2 bis 67

Diese Beispiele wurden analog Beispiel 1 durchgeführt. Dabei wurden die in der folgenden Tabelle aufgeführten Produkte erhalten.

**Tabelle 1**

| Beispiel | $R^1$ | $R^2$ | $R^3$ | $R^4$ | $R^5$ | $R^6$ | $\lambda_{max}$ |
|---|---|---|---|---|---|---|---|
| 2 | Me | H | COOEt | H | Me | H | 424 |
| 3 | Me | H | COOEt | Me | Me | H | 435 |
| 4 | Me | H | COOEt | H | Ph | H | 451 |
| 5 | Me | H | COOEt | Me | Ph | H | 443 |
| 6 | Me | H | COOEt | Me | 4-Cl-Ph | H | 442 |
| 7 | Me | H | COOEt | Me | 4-$OCH_3$-Ph | H | 453 |
| 8 | Me | H | COOEt | Me | Ph | 5-Me | 446 |
| 9 | Me | H | COOEt | Me | Ph | 6-Cl | 439 |
| 10 | Ph | H | COOEt | H | Me | H | 440 |
| 11 | Ph | H | COOEt | Me | Me | H | 447 |
| 12 | Ph | H | COOEt | H | Ph | H | 461 |
| 13 | Ph | H | COOEt | Me | Ph | H | 451 |
| 14 | Me | H | CN | H | Me | H | 453 |
| 15 | Me | H | CN | Me | Me | H | 458 |
| 16 | Me | H | CN | H | Ph | H | 480 |
| 17 | Me | H | CN | Me | Ph | H | 451 |
| 18 | Me | H | CN | Me | 4-Cl-Ph | H | 469 |
| 19 | Me | H | CN | Me | 4-$OCH_3$-Ph | H | 478 |
| 20 | Me | H | CN | Me | Ph | 5-Me | 471 |
| 21 | Me | H | CN | Me | Ph | 6-Cl | 467 |
| 22 | Ph | H | CN | H | Me | H | 465 |
| 23 | Ph | H | CN | Me | Me | H | 468 |
| 24 | Ph | H | CN | H | Ph | H | 494 |
| 25 | Ph | H | CN | Me | Ph | H | 481 |

**Tabelle 1**- 1. Fortsetzung

| Beispiel | $R^1$ | $R^2$ | $R^3$ | $R^4$ | $R^5$ | $R^6$ | $\lambda_{max}$ |
|---|---|---|---|---|---|---|---|
| 26 | Ph | Me | CN | Me | H | H | 454 |
| 27 | Ph | Me | CN | Me | Me | H | 463 |
| 28 | Ph | Me | CN | H | Ph | H | 493 |
| 29 | Ph | Me | CN | Me | Ph | H | 480 |
| 30 | Me | Me | CN | H | Ph | H | 480 |
| 31 | Me | Me | CN | Me | Ph | H | 468 |
| 32 | Me | Me | CN | H | Me | H | 452 |
| 33 | Me | Me | CN | Me | Me | H | 457 |
| 34 | Ph | $CH_2CN$ | CN | H | Ph | H | 488 |
| 35 | Ph | $CH_2CN$ | CN | Me | Ph | H | 473 |
| 36 | Ph | $CH_2CN$ | CN | H | Me | H | 458 |
| 37 | Ph | $CH_2CN$ | CN | Me | Me | H | 464 |
| 38 | Me | H | $CONH_2$ | H | Ph | H | 463 |
| 39 | Me | H | $CONH_2$ | Me | Ph | H | 459 |
| 40 | Me | H | $CONH_2$ | Me | Me | H | 448 |
| 41 | Ph | H | $CONH_2$ | H | Ph | H | 476 |
| 42 | Ph | H | $CONH_2$ | Me | Ph | H | 472 |
| 43 | Ph | H | $CONH_2$ | H | Me | H | 460 |
| 44 | Ph | H | $CONH_2$ | Me | Me | H | 467 |
| 45 | Me | Me | COOEt | H | Ph | H | 447 |
| 46 | Me | Me | COOEt | Me | Ph | H | 442 |
| 47 | Me | Me | COOEt | Me | Me | H | 433 |
| 48 | Ph | Me | COOEt | H | Ph | H | 429 |
| 49 | Ph | Me | COOEt | Me | Ph | H | 423 |

Tabelle 1- 2. Fortsetzung

| Beispiel | $R^1$ | $R^2$ | $R^3$ | $R^4$ | $R^5$ | $R^6$ | $\lambda_{max}$ |
|---|---|---|---|---|---|---|---|
| 50 | Ph | Me | COOEt | H | Me | H | 418 |
| 51 | Ph | Me | COOEt | Me | Me | H | 424 |
| 52 | Me | Me | COOMe | Me | Me | H | 432 |
| 53 | Ph | Me | COOMe | H | Ph | H | 436 |
| 54 | Ph | Me | COOMe | Me | Ph | H | 444 |
| 55 | Ph | Me | COOMe | H | Me | H | 414 |
| 56 | Me | $CH_2CN$ | CN | H | Ph | H | 472 |
| 57 | Me | $CH_2CN$ | CN | Me | Ph | H | 466 |
| 58 | Me | $CH_2CN$ | CN | H | Me | H | 438 |
| 59 | Me | $CH_2CN$ | CN | Me | Me | H | 452 |
| 60 | Me | Ph | CN | H | Ph | H | 476 |
| 61 | Me | Ph | CN | Me | Ph | H | 464 |
| 62 | Ph | Ph | CN | H | Ph | H | 482 |
| 63 | Ph | Ph | CN | Me | Ph | H | 478 |
| 64 | Ph | Ph | CN | H | Me | H | 454 |
| 65 | Ph | Ph | CN | Me | Me | H | 463 |
| 66 | Me | H | COOMe | H | Ph | H | 461 |
| 67 | Me | H | COOMe | Me | Ph | H | 442 |

Me = Methyl, Et = Ethyl, Ph = Phenyl

## Patentansprüche

1. Kationische Diazacyaninfarbstoffe der Formel (I)

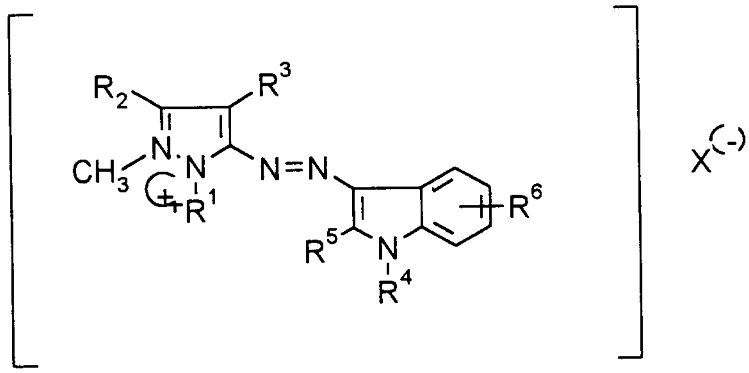

(I)

in der

$R^1$ für gegebenenfalls substituiertes Alkyl oder gegebenenfalls substituiertes Aryl,

$R^2$ für Wasserstoff, gegebenenfalls substituiertes Alkyl oder gegebenenfalls substituiertes Aryl,

$R^3$ für gegebenenfalls substituiertes Alkoxycarbonyl, gegebenenfalls substituiertes Aminocarbonyl oder Cyano,

$R^4$ für Wasserstoff oder gegebenenfalls substituiertes Alkyl,

$R^5$ für gegebenenfalls substituiertes Alkyl oder gegebenenfalls substituiertes Aryl,

$R^6$ für Wasserstoff, gegebenenfalls substituiertes Alkyl, Halogen, gegebenenfalls durch Alkyl oder Aryl, die ihrerseits gegebenenfalls substituiert sein können, substituiertes Amino, Cyano, Nitro, gegebenenfalls substituiertes Alkoxycarbonyl, gegebenenfalls substituiertes Alkylcarbonyl, gegebenenfalls substituiertes Aralkylcarbonyl, gegebenenfalls substituiertes Alkylsulfonyl, gegebenenfalls substituiertes Alalkylsulfonyl, gegebenenfalls substituiertes Arylsulfonyl oder gegebenenfalls durch Alkyl oder Aryl, die ihrerseits gegebenenfalls substituiert sein können, substituiertes Aminosulfonyl und

$X^{\ominus}$ für ein Äquivalent eines in der Farbstoffchemie üblichen Anions stehen.

**2.** Farbstoffe nach Anspruch 1, dadurch gekennzeichnet, daß in der Formel (I)

$R^1$ für $C_1$-$C_4$-Alkyl, das gegebenenfalls durch $C_1$-$C_4$-Alkoxy, Phenyl, Hydroxy, Carbonyl, $C_1$-$C_4$-Alkoxycarbonyl, Halogen, Cyano, gegebenenfalls substituiertes Amino, Aminocarbonyl, Sulfonyl, $C_1$-$C_4$-Alkoxysulfonyl, $C_6$-$C_{10}$-Arylsulfonyloxy-$C_1$-$C_4$-Alkyl der Formel Aryl-$SO_2$-O-alkyl,-Phenoxysulfonyl oder Aminosulfonyl substituiert ist,
wobei bei Phenylsubstituenten das Phenyl gegebenenfalls ein- bis viermal durch $C_1$-$C_4$-Alkyl, Halogen, Nitro, $C_1$-$C_4$-Alkoxy, $C_6$-$C_{10}$-Aryl-$C_1$-$C_4$-Alkoxy der Formel Aryl-alkoxy-, Cyano, Nitro, Hydroxy, Amino, das gegebenenfalls seinerseits ein- oder zweimal durch $C_1$-$C_4$-Alkyl, Phenyl, Acetyl oder Benzoyl substituiert sein kann, Aminocarbonyl, das gegebenenfalls seinerseits ein- oder zweimal durch $C_1$-$C_4$-Alkyl oder Phenyl substituiert sein kann, Sulfonyl, $C_1$-$C_4$-Alkylsulfonyl oder Aminosulfonyl substituiert sein kann, wobei bei Amino-, Aminocarbonyl- oder Aminosulfonylsubstituenten die Aminogruppe gegebenenfalls jeweils ein- oder zweimal durch $C_1$-$C_4$-Alkyl, Phenyl oder Acetyl substituiert sein kann, oder
für Phenyl, das gegebenenfalls durch $C_1$-$C_4$-Alkyl, $C_1$-$C_4$-Alkoxy, $C_6$-$C_{10}$-Aryl-$C_1$-$C_4$-Alkoxy der Formel Alkoxy-aryl-, Amino, Aminocarbonyl, $C_1$-$C_4$-Alkoxysulfonyl, $C_1$-$C_4$-Alkoxycarbonyl, $C_6$-$C_{10}$-Arylsulfonyl-oxy-$C_1$-$C_4$-alkyl der Formel Aryl-$SO_2$-O-Alkyl-, Sulfonyl, Phenoxysulfonyl, Cyano, Nitro, Hydroxy oder Carboxyl substituiert ist,
wobei Aminosubstituenten gegebenenfalls ein- oder zweimal durch $C_1$-$C_6$-Alkyl, Phenyl oder Acetyl substituiert sein können und
wobei bei Aminocarbonyl- und Aminosulfonylsubstituenten die Aminogruppe gegebenenfalls jeweils ein- oder zweimal durch $C_1$-$C_4$-Alkyl oder Phenyl substituiert sein kann,

$R^2$ für Wasserstoff, für $C_1$-$C_4$-Alkyl, das gegebenenfalls in gleicher Weise substituiert sein kann wie bei der Definition von Alkyl bei $R^1$ angegeben oder für Phenyl, das gegebenenfalls in gleicher Weise substituiert sein kann wie bei der Definition von Phenyl bei $R^1$ angegeben,

$R^3$ für $C_1$-$C_4$-Alkoxycarbonyl, das gegebenenfalls in gleicher Weise substituiert sein kann, wie bei der Definition von $C_1$-$C_4$-Alkyl bei $R^1$ angegeben, für Aminocarbonyl, das gegebenenfalls in gleicher Weise substituiert sein kann, wie bei der Definition von $C_1$-$C_4$-Alkyl substituierten Aminocarbonyl bei $R^1$ angegeben oder für Cyano,

$R^4$ für Wasserstoff oder für $C_1$-$C_4$-Alkyl, das gegebenenfalls in gleicher Weise substituiert sein kann, wie bei der Definition von $C_1$-$C_4$-Alkyl bei $R^1$ angegeben,

$R^5$ für $C_1$-$C_4$-Alkyl, das gegebenenfalls in gleicher Weise substituiert sein kann, wie bei der Definition von $C_1$-$C_4$-Alkyl bei $R^1$ angegeben oder für Phenyl, das gegebenenfalls in gleicher Weise substituiert sein kann, wie bei der Definition von Phenyl bei $R^1$ angegeben,

$R^6$ für Wasserstoff, für $C_1$-$C_4$-Alkyl, das gegebenenfalls in gleicher Weise substituiert sein kann, wie bei der Definition von $C_1$-$C_4$-Alkyl bei $R^1$ angegeben, für Chlor, für Amino, Aminocarbonyl oder Aminosulfonyl, die gegebenenfalls in gleicher Weise substituiert sein können wie bei der Definition von $C_1$-$C_4$-Alkyl, das mit diesen Resten substituiert ist, bei $R^1$ angegeben, für Cyano, für Nitro, für $C_1$-$C_4$-Alkoxycarbonyl, für $C_1$-$C_4$-Alkylcarbonyl, für $C_6$-$C_{10}$-Aryl-$C_1$-$C_4$-Alkylcarbonyl, für $C_1$-$C_4$-Alkylsulfonyl, für $C_6$-$C_{10}$-Aryl-$C_1$-$C_4$-Alkylsulfonyl, für $C_6$-$C_{10}$-Arylsulfonyl oder für Aminosulfonyl, das gegebenenfalls ein- oder zweimal mit $C_1$-$C_4$-Alkyl oder Phenyl substituiert sein kann und

$X^{\ominus}$ für ein Äquivalent von Chlorid, Bromid, Sulfat, Methylsulfat, Acetat, Lactat, Tetrafluoroborat, Trichlorzinkat, Tetrachlorzinkat oder Tetrachlorferrat stehen.

**3.** Farbstoffe nach Ansprüchen 1 und 2, dadurch gekennzeichnet, daß in der Formel (I)

$R^1$ für $C_1$-$C_4$-Alkyl, das gegebenenfalls ein- bis zweimal durch Phenyl, Hydroxy, Chlor, Cyano oder Aminocarbonyl substituiert sein kann oder für Phenyl, das gegebenenfalls ein- bis dreimal durch $C_1$-$C_4$-Alkyl, $C_1$-$C_4$-Alkoxy, Cyano, Nitro, Hydroxy oder Amino, das gegebenenfalls seinerseits ein- oder zweimal durch $C_1$-$C_4$-Alkyl, Phenyl oder Acetyl substituiert sein kann,

$R^2$ für Wasserstoff, für $C_1$-$C_4$-Alkyl, das gegebenenfalls ein- oder zweimal durch Cyano oder Aminocarbonyl substituiert sein kann oder für Phenyl, das gegebenenfalls ein- bis dreimal durch $C_1$-$C_4$-Alkyl, $C_1$-$C_4$-Alkoxy, $C_1$-$C_4$-Alkoxycarbonyl oder Cyano substituiert sein kann

$R^3$ für $C_1$-$C_4$-Alkoxycarbonyl, das gegebenenfalls ein- bis zweimal durch Phenyl substituiert sein kann, für Aminocarbonyl, das gegebenenfalls ein- oder zweimal durch $C_1$-$C_4$-Alkyl oder Phenyl substituiert sein kann oder für Cyano,

$R^4$ für Wasserstoff oder für $C_1$-$C_4$-Alkyl, das gegebenenfalls ein- bis zweimal durch Chlor, Cyano, $C_1$-$C_4$-Alkoxycarbonyl, Phenyl oder Aminocarbonyl substituiert sein kann, wobei Aminocarbonyl gegebenenfalls ein- oder zweimal durch $C_1$-$C_4$-Alkyl oder Phenyl substituiert sein kann,

$R^5$ für $C_1$-$C_4$-Alkyl, das gegebenenfalls ein- oder zweimal duch Chlor oder Cyano substituiert sein kann oder für Phenyl, das gegebenenfalls ein- bis dreimal durch $C_1$-$C_4$-Alkyl, Chlor, Cyano, Nitro, $C_1$-$C_4$-Alkoxy, $C_1$-$C_4$-Alkoxycarbonyl, Sulfonyl, $C_1$-$C_4$-Alkoxysulfonyl, Amino oder Aminocarbonyl substituiert sein kann, wobei Amino und Aminocarbonyl gegebenenfalls ein- oder zweimal durch $C_1$-$C_4$-Alkyl oder Phenyl substituiert sein kann,

$R^6$ für Wasserstoff, für Chlor, für $C_1$-$C_4$-Alkyl, das gegebenenfalls ein- oder zweimal durch $C_1$-$C_4$-Alkoxy, Amino oder Aminocarbonyl substituiert sein können, wobei Amino und Aminocarbonyl gegebenenfalls ein- oder zweimal durch $C_1$-$C_4$-Alkyl oder Phenyl substituiert sein können, für Amino, das gegebenenfalls ein- oder zweimal durch $C_1$-$C_4$-Alkyl, das gegebenenfalls ein- oder zweimal durch Cyano, Chlor oder Phenyl substituiert sein kann, für Aminocarbonyl, das gegebenenfalls ein- oder zweimal durch $C_1$-$C_4$-Alkyl oder Phenyl substituiert sein kann, für Cyano, für Nitro, für $C_1$-$C_4$-Alkoxycarbonyl, für $C_1$-$C_4$-Alkylcarbonyl, $C_1$-$C_4$-Alkylsulfonyl, für Phenylsulfonyl oder für Aminosulfonyl, das gegebenenfalls ein- oder zweimal durch $C_1$-$C_4$-Alkyl oder Phenyl substituiert sein kann stehen und

$X^{\ominus}$ die in Anspruch 2 angegebene Bedeutung hat.

**4.** Farbstoff nach Ansprüchen 1 bis 3, dadurch gekennzeichnet, daß in der Formel (I)

$R^1$ für Methyl, Ethyl oder Phenyl,

$R^2$ für Wassertoff, Methyl, Ethyl, Cyanomethyl, Aminocarbonylmethyl oder Phenyl,

$R^3$ für Methoxycarbonyl, Ethoxycarbonyl, Benzoxycarbonyl, Cyano oder Aminocarbonyl,

$R^4$ für Wasserstoff oder $C_1$-$C_4$-Alkyl, das gegebenenfalls durch eine Phenyl-, Cyano- oder Aminocarbonylgruppe substituiert sein kann, wobei Aminocarbonyl gegebenenfalls ein- oder zweimal durch $C_1$-$C_4$-Alkyl oder Phenyl substituiert sein kann,

$R^5$ für $C_1$-$C_4$-Alkyl, das gegebenenfalls durch eine Cyanogruppe substituiert sein kann, oder für Phenyl, das gegebenenfalls ein- oder zweimal durch Methyl, Ethyl, Amino, Cyano, Aminocarbonyl, Methoxy, Ethoxy, Methoxycarbonyl oder Ethoxycarbonyl substituiert sein kann, wobei

Amino gegebenenfalls ein- oder zweimal durch Methyl oder Ethyl und Aminocarbonyl gegebenenfalls ein- oder zweimal durch Methyl, Ethyl oder Phenyl substituiert sein kann und

$R^6$ für Wasserstoff, für Methyl oder Ethyl, die gegebenenalls durch eine Cyano-, Methoxy-, Ethoxy, Amino- oder Aminocarbonylgruppe substituiert sein können, wobei Amino gegebenenfalls ein- oder zweimal durch Methyl oder Ethyl und Aminocarbonyl gegebenenfalls ein- oder zweimal durch Methyl, Ethyl oder Phenyl substituiert sein kann, für Amino, das gegebenenfalls ein- oder zweimal durch Methyl, Ethyl, Cyanmethyl, Cyanethyl, Methylphenyl oder Ethylphenyl substituiert sein kann, für Aminocarbonyl, das gegebenenfalls ein- oder zweimal durch Methyl, Ethyl oder Phenyl substituiert sein kann, für Cyano, für Nitro, für Methoxycarbonyl, für Ethoxycarbonyl, für Methylsulfonyl, für Ethylsulfonyl, Phenylsulfonyl oder Aminosulfonyl in 5-Stellung und

$X^{\ominus}$ für ein Äquivalent von Chlorid, Acetat, Trichlorzinkat oder Tetrachlorferrat stehen.

**5.** Verfahren zur Herstellung von kationischen Diazacyaninfarbstoffen des Anspruchs 1, dadurch gekennzeichnet, daß man eine Verbindung der Formel (II)

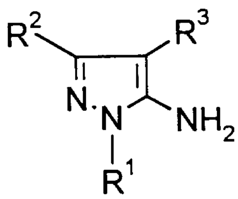

(II),

in der $R^1$, $R^2$ und $R^3$ die bei Formel (I) angegebene Bedeutung haben, mit Nitrosylschwefelsäure in Gegenwart von Essigsäure und/oder Propionsäure diazotiert, das Diazotierungsprodukt mit einer Verbindung der Formel (III) umsetzt

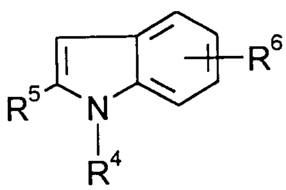

(III),

in der $R^4$, $R^5$ und $R^6$ die in Anspruch 1 angegebene Bedeutung haben, kuppelt und die entstandenen Azofarbstoffe mit einem Methylierungsmittel in einem Lösungsmittel methyliert.

**6.** Verfahren nach Anspruch 5, dadurch gekennzeichnet, daß man die Diazotierung unter +10 °C, die Kupplung unter +30 °C und die Methylierung bei 40 bis 90 °C durchführt.

**7.** Verfahren nach Ansprüchen 5 und 6, dadurch gekennzeichnet, daß man die Kupplungskomponente in einer Menge von 1,01 bis 1,20 Mol, bezogen auf das Diazotierungsprodukt der Verbindung der Formel (II) einsetzt.

**8.** Verwendung von kationischen Diazacyaninfarbstoffen des Anspruchs 1 zum Färben und Bedrucken von Textilfasermaterialien.

**9.** Verwendung nach Anspruch 8, dadurch gekennzeichnet, daß es sich bei den Textilfasermaterialien um solche handelt, die aus Polyacrylnitril, sauer modifizierten Polyamiden oder sauer modifizierten Polyestern bestehen oder eines oder mehrere dieser Materialien enthalten.

**10.** Textilfasermaterialien, dadurch gekennzeichnet, daß sie mit kationischen Diazacyaninfarbstoffen des Anspruchs 1 gefärbt oder bedruckt sind.

Europäisches Patentamt

# EUROPÄISCHER RECHERCHENBERICHT

Nummer der Anmeldung
EP 94 10 6398

## EINSCHLÄGIGE DOKUMENTE

| Kategorie | Kennzeichnung des Dokuments mit Angabe, soweit erforderlich, der maßgehlichen Teile | Betrifft Anspruch | KLASSIFIKATION DER ANMELDUNG (Int.Cl.5) |
| --- | --- | --- | --- |
| D,X<br><br><br><br><br>D,Y | US-A-3 585 182 (J.M.STRALEY ET AL.)<br>* Spalte 4, Zeilen 9-70; Spalte 5, Zeilen 41-48 *<br>* Spalte 27, Zeile 20 - Spalte 28, Zeile 31; Beispiele 69,70 *<br>--- | 1-10<br><br><br><br><br>5-10 | C09B44/14<br>//D06P3/24,<br>D06P3/52,<br>D06P3/70,<br>D06P1/41 |
| Y | DE-A-26 43 639 (PRODUITS CHIMIQUES UGINE KUHLMANN)<br>* Seite 7, Absatz 3 - Seite 8, Absatz 1; Ansprüche 3,4 *<br>--- | 5-10 | |
| A,D | US-A-3 515 715 (J.M.STRALEY ET AL.)<br>* Ansprüche; Beispiele *<br>--- | 1-10 | |
| A,D | EP-A-0 055 224 (CIBA-GEIGY AG.)<br>* Beispiele 1,7,8,9 *<br>--- | 1-10 | |
| A | FR-A-1 486 066 (J.R. GEIGY S.A.)<br>* Zusammenfassung; Ansprüche *<br>----- | 1-10 | RECHERCHIERTE SACHGEBIETE (Int.Cl.5)<br>C09B |

Der vorliegende Recherchenbericht wurde für alle Patentansprüche erstellt

| Recherchenort | Abschlußdatum der Recherche | Prüfer |
| --- | --- | --- |
| DEN HAAG | 25. August 1994 | Ginoux, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)